# EUROPEAN PATENT APPLICATION

(11) **EP 4 550 648 A2**
(43) Date of publication of application: **07.05.2025**
(21) Application number: 24208399.6
(22) Date of filing: 23.10.2024
(51) Int. Cl.: H02M 1/32, H02M 3/158

(54) **DC:DC CONVERTER CONTROL**

(30) Priority: 01.11.2023 GB 202316708
(71) Applicant: Rolls-Royce plc, London N1 9FX (GB)
(72) Inventor: Trainer, David R, Derby, DE24 8BJ (GB); Sweet, Mark R, Derby, DE24 8BJ (GB)
(74) Representative: Rolls-Royce plc

(57) **Abstract**

Electrical power systems 10, 20, 30 comprising H-bridge DC:DC converters 100 and methods 200 of operating electrical power systems 10, 20, 30 comprising H-bridge DC: DC converters 100 are provided. One such electrical power system 10, 20, 30 comprises: an H-bridge DC:DC power converter 100 comprising first and second half-bridge circuits 110, 120 each having a low-side transistor 111-L, 121-L and a high-side transistor 111-H, 121-H, and an inductor 125 connected between respective AC sides of the first and second half-bridge circuits 110, 120; a DC power source connected to a DC side of the first half-bridge circuit of the H-bridge DC:DC converter; a DC electrical network connected to a DC side of second half-bridge circuit of the H-bridge converter; and a control system 150. The control system 150 is configured to: control a switching state of the low-side and high-side transistors of the first and second half-bridge circuits; monitor one or more operating parameters of the electrical power system and determine, based on the one or more parameters, whether there is a fault in the DC electrical network; and in response to determining there is a fault in the DC electrical network, modify a switching operation of the low-side and high-side transistors of the first and second half-bridge circuits to supply a controlled amount of current from the DC power source to the DC electrical network.

## Description

### TECHNICAL FIELD

This disclosure relates to electrical power systems comprising H-bridge DC:DC power converters and to methods of controlling electrical power systems comprising H-bridge DC:DC power converters.

### BACKGROUND

A DC:DC power electronics converter may be used to interface between two DC parts of an electrical power system. For example, an electrical power system may have two DC electrical networks with different operating voltages, and a DC:DC converter may provide an interface between the two networks so that power can be exchanged between them. In another example, an electrical power system may include a DC electrical network that is supplied with power by an energy storage system (e.g., a battery). The terminal voltage of a battery typically decreases with its state of charge, so a DC:DC converter may be provided between the terminals of the energy storage system and the DC electrical network to stabilise the voltage supplied to the DC electrical network as the battery discharges.

In the event of a fault in a DC network connected to one side of a DC:DC converter, a zero or near-zero impedance is presented across the DC terminals facing the fault. This very low impedance may result in a very large current - referred to herein as the fault current - being fed from the healthy side of the converter to the fault site. This may be particularly concerning where the healthy side of the converter interfaces with an energy storage system, which may store a very large amount of energy and have low internal resistance, resulting in a particularly high fault current capable of damaging the faulted DC network.

### SUMMARY

According to a first aspect, there is an electrical power system, comprising:
an H-bridge DC:DC power converter comprising first and second half-bridge circuits each having a low-side transistor and a high-side transistor, and an inductor connected between respective AC sides of the first and second half-bridge circuits;
a DC power source connected to a DC side of the first half-bridge circuit of the H-bridge DC:DC converter;
a DC electrical network connected to a DC side of second half-bridge circuit of the H-bridge converter; and
a control system configured to:
   control a switching state of the low-side and high-side transistors of the first and second half-bridge circuits;
   monitor one or more operating parameters of the electrical power system and determine, based on the one or more parameters, whether there is a fault in the DC electrical network; and
   in response to determining there is a fault in the DC electrical network, modify a switching operation of the low-side and high-side transistors of the first and second half-bridge circuits to supply a controlled amount of current from the DC power source to the DC electrical network.

In an embodiment, modifying the switching operation of the low-side and high-side transistors of the first and second half-bridge circuits comprises repeatedly switching the H-bridge DC:DC power converter between two or more configurations selected from:
a first configuration in which the low-side transistor of the first half-bridge circuit is switched off, the high-side transistor of the first half-bridge circuit is switched on, the low-side transistor of the second half-bridge circuit is switched off, and the high-side transistor of the second half-bridge circuit is switched on;
a second configuration in which the low-side transistor of the first half-bridge circuit is switched on, the high-side transistor of the first half-bridge circuit is switched off, the low-side transistor of the second half-bridge circuit is switched off, and the high-side transistor of the second half-bridge circuit is switched on;
a third configuration in which the low-side transistor of the first half-bridge circuit is switched off, the high-side transistor of the first half-bridge circuit is switched on, the low-side transistor of the second half-bridge circuit is switched on, and the high-side transistor of the second half-bridge circuit is switched off;
a fourth configuration in which the low-side transistor of the first half-bridge circuit is switched on, the high-side transistor of the first half-bridge circuit is switched off, the low-side transistor of the second half-bridge circuit is switched on, and the high-side transistor of the second half-bridge circuit is switched off;
a fifth configuration in which the low-side transistor of the first half-bridge circuit is switched off, the high-side transistor of the first half-bridge circuit is switched on, the low-side transistor of the second half-bridge circuit is switched on, and the high-side transistor of the second half-bridge circuit is switched on;
a sixth configuration in which the low-side transistor of the first half-bridge circuit is switched on, the high-side transistor of the first half-bridge circuit is switched off, the low-side transistor of the second half-bridge circuit is switched on, and the high-side transistor of the second half-bridge circuit is switched on.

In an embodiment, the control system is configured to repeatedly switch the H-bridge DC:DC power converter between precisely two of the six configurations.

In an embodiment, the control system is configured to repeatedly switch the H-bridge DC:DC power converter between three or more (e.g., precisely three) of the six configurations.

In an embodiment, the control system is configured to repeatedly switch the H-bridge DC:DC power converter between four or more (e.g., precisely four) of the six configurations.

In an embodiment, the control system is configured to repeatedly switch the H-bridge DC:DC power converter between five or more (e.g., precisely five) of the six configurations.

In an embodiment, the control system is configured to repeatedly switch the H-bridge DC:DC power converter between all six of the configurations.

In an embodiment, the two or more configurations include at least one of the first, third and fifth configurations; and at least one of the second, fourth and sixth configurations.

In an embodiment, the first and second configurations are a first group of configurations; the third and fourth configurations are a second group of configurations; the fifth and sixth configurations are a third group of configurations; and the two or more configurations include configurations from at least two different groups of the first, second and third groups of configurations.

In an embodiment the two or more configurations include one or both of the fifth configuration and the sixth configuration, and the controller is configured, in response to determining there is a fault in the DC electrical network, to reduce a gate-source voltage, V_{GS}, of the low-side transistor of the second half-bridge circuit.

In an embodiment, the control system is configured to control respective fractions of time the H-bridge DC:DC power converter is in each respective one of the two or more configurations to control the amount of current supplied from the DC power source to the DC electrical network.

In an embodiment, an average of between 1.3 and 1.7 per unit current is supplied from the DC power source to the DC electrical network.

In an embodiment, the H-bridge DC:DC converter further comprises a resistor connected with the low-side transistor of the first half-bridge circuit.

In an embodiment, the H-bridge DC:DC converter further comprises a switch for selectively connecting and disconnecting the resistor to a current path through the low-side transistor of the first half-bridge circuit. The control system is configured to control the switch to connect the resistor and the low-side transistor of the first half-bridge circuit in response to determining there is a fault in the DC electrical network.

In an embodiment, the resistor is connected in series with a diode connected in parallel with the low-side transistor of the first half-bridge circuit.

In an embodiment, the control system is further configured to isolate the fault in the DC network by operating one or more protection devices.

In an embodiment, after isolating the fault in the DC network, the control system is configured to charge one or more capacitors of the DC electrical network by controlling the switching operation of the low-side and high-side transistors of the first and second half-bridge circuits to supply a controlled amount of current from the DC power source to the DC electrical network.

In an embodiment, the transistors are Silicon Carbide (SiC) MOSFETs.

In an embodiment, the DC power source is an energy storage system.

In an embodiment, the DC power source is a second DC electrical network.

The control system can take any suitable form. For example, the control system may be a single controller, or multiple distributed controllers. It may be implemented in hardware and/or software.

According to a second aspect, there is an H-bridge DC: DC power converter comprising: a first half-bridge circuit having a low-side transistor and a high-side transistor; a second half-bridge circuit having a low-side transistor and a high-side transistor; an inductor connected between respective AC sides of the first and second half-bridge circuits; and a resistor connected with the low-side transistor of the first half-bridge circuit.

In an embodiment, the H-bridge DC:DC converter further comprises a switch for selectively connecting and disconnecting the resistor to a current path through the low-side transistor of the first half-bridge circuit.

In an embodiment, the resistor is connected in series with a diode connected in parallel with the low-side transistor of the first half-bridge circuit.

According to a third aspect, there is an electrical power system comprising: the H-bridge DC:DC power converter of the second aspect; a DC power source connected to a DC side of the first half-bridge circuit; a DC electrical network connected to a DC side of the second half-bridge circuit; and a control system configured to control a switching operation of the transistors. The control system is configured to: during fault-free operation, repeatedly switch the H-bridge DC:DC power converter between a first configuration in which the low-side transistor of the second half-bridge circuit is switched on and the high-side transistor of the second half-bridge circuit is switched off and a second configuration in which the low-side transistor of the second half-bridge circuit is switched off and the high-side transistor of the second half-bridge circuit is switched on, wherein in both the first and second configurations the low-side transistor of the first half-bridge circuit is switched off and the high-side transistor of the first half-bridge circuit is switched on; in response to a fault in the DC electrical network, switch the H-bridge DC:DC power converter into a configuration in which the low-side transistor of the first half-bridge circuit is switched on so that current passes through the resistor.

The electrical power systems of the first and third aspects may be or form part of an aircraft power and propulsion system. The power and propulsion system may be a purely electric power and propulsion system, a hybrid power and propulsion system (e.g., gas turbine and battery/fuel cell hybrid, or battery and fuel cell hybrid system), or a 'more electric' propulsion system having propulsive gas turbine engines that interface with an electrical power system through spool-coupled electrical machines.

According to a fourth aspect, there is an aircraft comprising the electrical power system of the first aspect, the H-bridge DC:DC power converter of the second aspect, or the electrical power system of the third aspect.

According to a fifth aspect, there is a method of operating an electrical power system according to the first aspect. The method comprises:
monitoring one or more operating parameters of the electrical power system;
determining, based on the one or more operating parameters, whether there is a fault in the DC electrical network; and
in response to determining there is a fault in the DC electrical network, modifying a switching operation of the low-side and high-side transistors of the first and second half-bridge circuits to supply a controlled amount of current from the DC power source to the DC electrical network.

In an embodiment, modifying the switching operation of the low-side and high-side transistors of the first and second half-bridge circuits comprises repeatedly switching two or more configurations including a configuration in which a current through the inductor increases and a configuration in which the current through the inductor decreases.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Fig. 1A** is a schematic illustration of an electrical power system including a boost-type DC:DC power converter, showing its basic operation;
**Fig. 1B** illustrates the effect of a DC network fault on the operation of the boost-type DC:DC converter of Fig. 1A;
**FIG. 2A** is a schematic illustration of an electrical power system including an H-bridge DC:DC power converter;
**FIG. 2B** illustrates how the fault current may be blocked or reduced using the H-bridge DC:DC power converter of FIG. 2A;
**FIG. 3** illustrates the supply of a controlled amount of fault current through an H-bridge DC:DC power converter;
**FIG. 4A** illustrates four switching configurations of an H-bridge DC:DC converter that may be used for fault current control;
**FIG. 4B** shows plots of current waveforms and average amounts of fault current supplied using the switching configurations of FIG. 4A;
**FIG. 5A** illustrates two further switching configurations of an H-bridge DC:DC converter that may be used for fault current control;
**FIG. 5B** shows plots of current waveforms and average amounts of fault current supplied using one of the switching configurations of FIG. 5A;
**FIG. 5C** illustrates how the gate-source voltage of a transistor may be reduced to implement the configurations of FIG. 5A
**FIG. 6** illustrates how the supply of a controlled amount of fault current to a DC network may be used to re-charge system capacitors;
**FIG. 7A** illustrates an H-bridge DC:DC converter with additional resistance in one of the low-side transistor current paths;
**FIG. 7B** illustrates the effect of the additional resistance;
**FIG. 8A** is a schematic diagram of an aircraft power and propulsion system that includes DC:DC converters;
**FIG. 8B** is a schematic illustration of an electric aircraft propulsion system;
**FIG. 8C** is a schematic illustration of a hybrid electric aircraft propulsion system;
**FIG. 9A** is a plan view of an aircraft; and
**FIG. 9B** is a perspective view of a vertical take-off and landing (VTOL) aircraft; and
**FIG. 10** is a flow chart of a method of operating an electrical power system.

### DETAILED DESCRIPTION

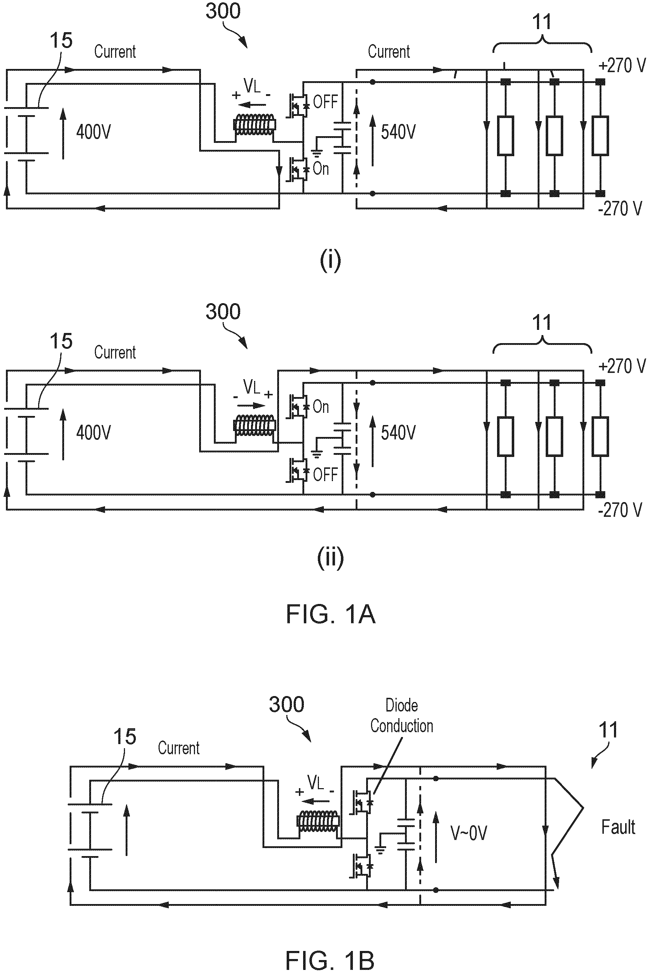

**FIG. 1A** illustrates the normal operation of a "boost chopper" type DC:DC power converter 300, the general configuration of which will be familiar to those skilled in the art. The boost chopper DC:DC converter 300 operates in two basic switching configurations, the first shown in the top circuit (i) and the second shown in the bottom circuit (ii). In configuration (i), the lower transistor is switched on and applies the battery voltage, here 400 V in a positive direction, to the inductor such that the current increases, increasing the stored energy in the inductor. In configuration (ii), the upper transistor is switched on and applies the difference between the voltages of the battery 15 and DC bus 11 to the inductor, here 400 V - 540 V = 140 V in the negative direction, to the inductor such that the current decreases, reducing the stored energy in the inductor. Notably, the operation of the converter 300 fundamentally relies on its ability to apply a positive and negative voltage for appropriate times to control the current fed from the battery 15 and the current fed to the DC capacitors and loads.

**FIG. 1B** illustrates a problem that arises when a low-impedance fault occurs in the DC electrical network 11 (e.g., at one of the attached loads). With the lower transistor on, 400 V is applied to the inductor in a positive direction, causing the current to increase at a rate controlled by V = L x di/dt. If the lower transistor is turned off, the diode of the upper transistor is forward biased, again applying approximately 400V to the inductor in a positive direction and again causing the inductor current to increase. In other words, the converter loses the ability to apply a negative voltage to the inductor. The fault current therefore persists and increases until other protection is activated. Significant damage could occur in the meantime.

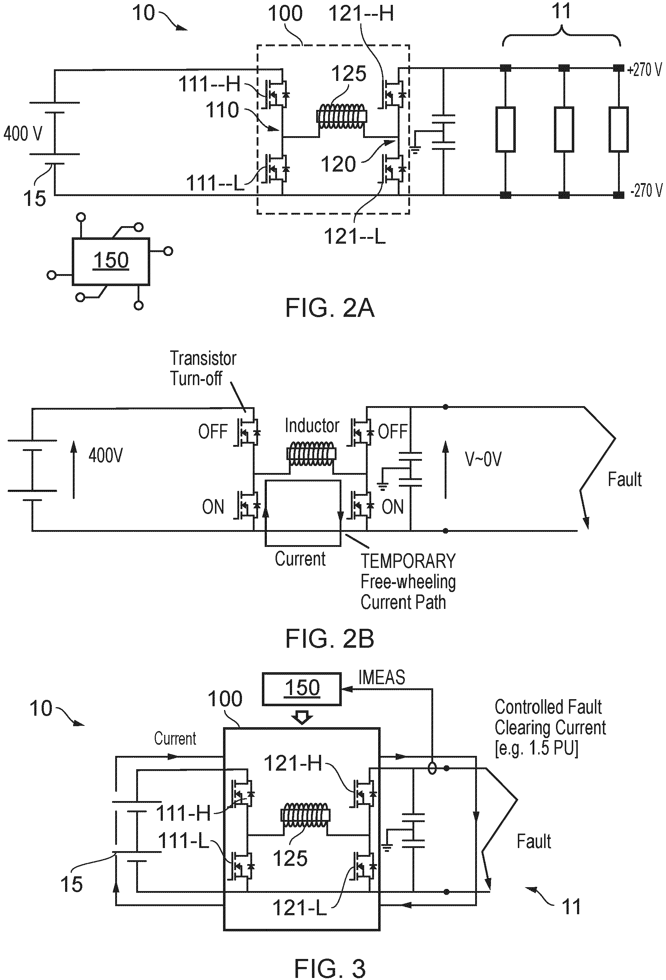

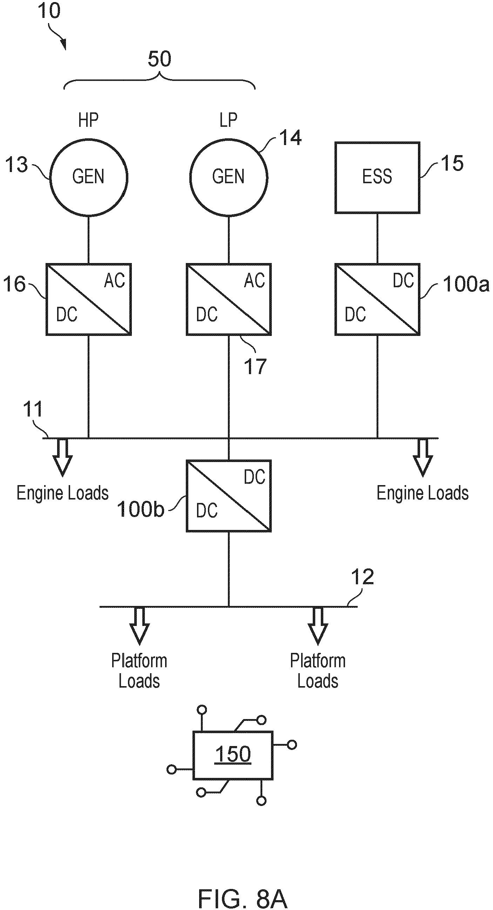

In accordance with aspects of the present disclosure, **FIG. 2A** illustrates an electrical power system 10 comprising an H-bridge DC:DC power converter 100. In this example, the H-bridge DC:DC converter 100 is providing an interface between a battery 15 (having an exemplary terminal voltage of 400 V) and a DC electrical network 11 (illustrated by three loads and having an exemplary operating voltage of +/- 270 V). In other examples, the converter 100 could interface between two DC electrical networks having different operating voltages (e.g., DC networks 11, 12 in the electrical power system 10 of FIG. 8A).

The H-bridge DC:DC power converter 100 comprises a first half-bridge circuit 110 and a second half-bridge circuit 120. Each of the first and second half-bridge circuits 110, 120 includes a low-side transistor 111-L, 121-L and a high-side transistor 111-H, 121-H. Nodes at the mid-points of the two half-bridge circuits 110, 120 (i.e., between the low- and high-side transistors) are connected by an AC link comprising an inductor 125. The high- and low- DC sides of the first half-bridge 110 are connected to the positive and negative terminals of the battery 15. The high- and low- DC sides of the second half-bridge 120 are connected to the positive and negative rails of the DC electrical network 11. Although not illustrated, those skilled in the art will appreciate that the gate terminals of the transistors 111-L, 111-H, 121-L, 121-H are connected to gate driver circuits from which they receive gate switching signals, under the control of a control system 150.

The normal operation of the H-bridge converter 100 is similar to that of the boost chopper converter described above. The low-side transistor 111-L of the first half-bridge 110 is switched off and the high-side transistor 111-H of the half-bridge 110 is switched on, such that the left-hand side of the H-bridge converter 100 is effectively of the same configuration as the left-hand side of the boost chopper converter of FIG 1A. The low- and high-side transistors 121-L, 121-H of the second half-bridge are then switched between the two configurations, (i) and (ii), shown in FIG 1A, so that the inductor 125 is alternately charged by the battery 15 and discharged to the DC network 14.

However, when there is a low-impedance fault in the DC electrical network 11, alternative operating modes are available that may alleviate the problems described above. A first example is shown in **FIG. 2B****.** Here, the switching states of the low- and high-side transistors 111-L, 111-H of the first half-bridge circuit 110 are reversed (i.e., the low-side transistor 111-L is switched on and the high-transistor 111-H is switched off), while in the second half-bridge circuit 120, the low-side transistor 121-L is switched on and the high-side transistor 121-H is switched off. In this configuration, current cannot reach the faulted DC network 11 and is instead contained within and circulates within the converter 100. At the same time, the battery 15 is prevented from charging the inductor 125, so the current that circulates within the converter 100 decays with a characteristic time constant of UR, L and R respectively being the inductance and resistance of the current path.

While the configuration shown in FIG. 2B usefully allows the fault current to be blocked, it may have limitations in some cases. For example, with zero current supplied to the faulted DC network, it may not be possible to activate protection systems, such as DC contactors, in the faulted network to isolate the fault so that the remaining, non-faulted, parts of the network can return to normal operation. To this end, and in accordance with some aspects of the present disclosure, **FIG. 3** illustrates the supply of a controlled, non-zero, amount of fault current from a DC power source (e.g., a battery 15 or DC network) to the faulted DC network via the H-bridge converter 100. Here, in response to the detection of a fault in the DC network 11, the control system 150 modifies the switching operation of the transistors 111-L, 111-H, 121-L, 121-H of the two half-bridge circuits 110, 120 to supply a controlled amount of current to the DC network 11. In some examples, an average current of about 1.5 per unit current (e.g., between 1.1 and 1.9 per unit current, or between 1.3 and 1.7 per unit current) is supplied.

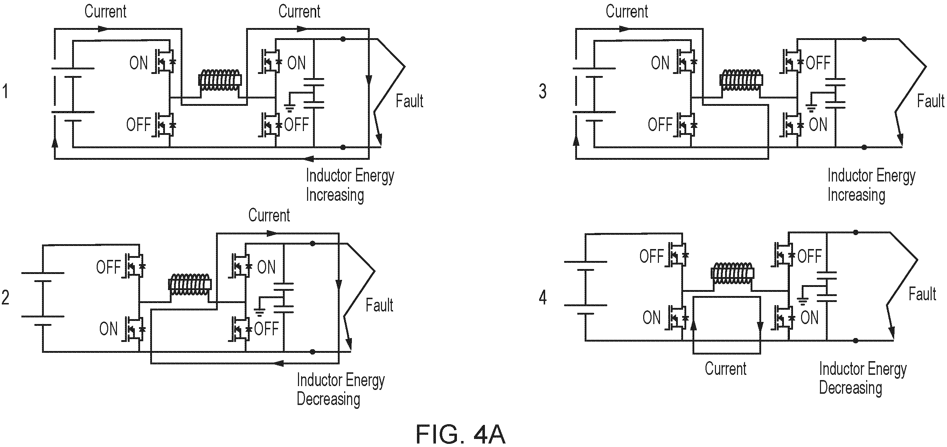

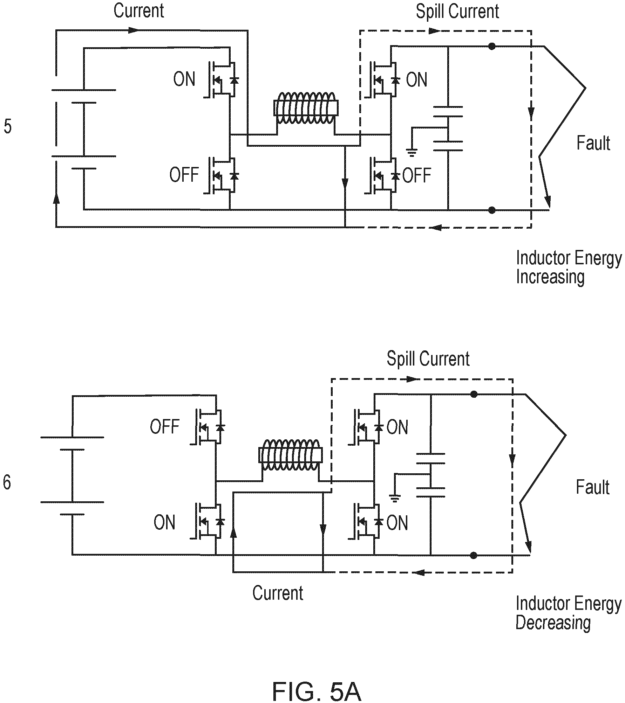

In order to supply a controlled amount of fault current, the control system 150 repeatedly switches the H-bridge converter 100 between a plurality of different switching configurations for which a different amount of current is supplied from the DC power source (e.g., the battery 15) to the faulted network 11. By controlling the fraction of time that the H-bridge converter 100 is in each configuration, the average amount of current supplied to the DC network is controlled. **FIG. 4A** illustrates four possible configurations. A further two configurations are described below with reference to **Fig. 5A****.**

Referring to FIG. 4A, in the first configuration, the low-side transistor 111-L of the first half-bridge circuit 110 is switched off, the high-side transistor 111-H of the first half-bridge circuit 110 is switched on, the low-side transistor 121-L of the second half-bridge circuit 120 is switched off, and the high-side transistor 121-H of the second half-bridge circuit 120 is switched on. In the first configuration, fault current is supplied to the faulted DC network and, since the high-side transistor 111-H of the first half-bridge 110 is switched on, the current through the inductor 125 increases.

In the second configuration, the low-side transistor 111-L of the first half-bridge circuit 110 is switched on, the high-side transistor 111-H of the first half-bridge circuit 110 is switched off, the low-side transistor 121-L of the second half-bridge circuit 120 is switched off, and the high-side transistor 121-H of the second half-bridge circuit 120 is switched on. In the second configuration, fault current is supplied to the faulted DC network and, since the high-side transistor 111-H of the first half-bridge 110 is switched off, the current through the inductor 125 decreases (i.e., while in the second configuration, current decays with time constant UR).

In the third configuration, the low-side transistor 111-L of the first half-bridge circuit 110 is switched off, the high-side transistor 111-H of the first half-bridge circuit 110 is switched on, the low-side transistor 121-L of the second half-bridge circuit 120 is switched on, and the high-side transistor 121-H of the second half-bridge circuit 120 is switched off. In the third configuration, fault current is contained within the converter 100 and cannot reach the faulted DC network. Thus, time spent in the third configuration reduces the average current supplied to the DC network. Current through the inductor 125 increases in the third configuration, as the high-side transistor 111-H of the first half-bridge circuit 110 is switched on.

In the fourth configuration, the low-side transistor 111-L of the first half-bridge circuit 110 is switched on, the high-side transistor 111-H of the first half-bridge circuit 110 is switched off, the low-side transistor 121-L of the second half-bridge circuit 120 is switched on, and the high-side transistor 121-H of the second half-bridge circuit 120 is switched off. In the third configuration, fault current is contained within the converter 100 and cannot reach the faulted DC network. Thus, time spent in the third configuration reduces the average current supplied to the DC network. Current through the inductor 125 decreases in the third configuration, as the high-side transistor 111-H of the first half-bridge circuit 110 is switched off. It is noted that the fourth configuration corresponds to the switching configuration shown in FIG. 2B.

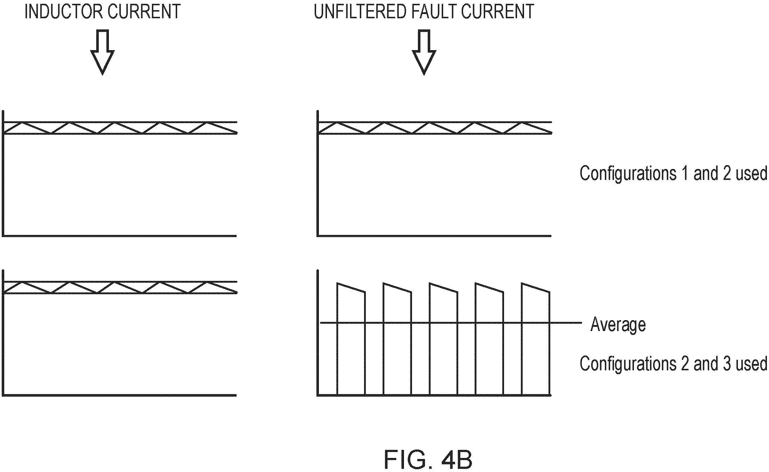

**FIG. 4B** illustrates example current waveforms that may be produced by repeatedly switching the transistors of the H-bridge converter 100 between two of the four configurations of FIG. 4A. In the first example, the control system 150 switches the converter 100 between the first configuration and the second configuration. In the second example, the control system 150 switches the converter 100 between the second configuration and the third configuration. The waveform of the current through the inductor 125 is shown in the left-hand plot and an unfiltered version of the current waveform supplied to the faulted DC network is shown in the right-hand plot.

In the first example, fault current is supplied from the left-hand side of the converter 100 (e.g., from a battery 15) to the DC network in both the first and second configurations. However, the amount of current increases when the converter 100 is in the first configuration but decreases when the converter 100 is in the second configuration. The average amount of current will therefore depend on the fraction of time spent in the second configuration: the greater the fraction of time the converter 100 is the second configuration, the lower the average current will be. In this example, the control system 150 controls the converter 100 so that it spends approximately twice as long in the second configuration as the first configuration (i.e., the converter 100 is in the first configuration for one third of the time and in the second configuration for two thirds of the time). If more time was spent in the second configuration, the average current would be lower and *vice versa.*

In the second example, current is supplied to the DC network in the second configuration but contained within the converter 100 in the third configuration. The average amount of current supplied to the DC network will therefore be greater than zero but less than the current supplied to the converter in the second configuration. This is shown by the line labelled "Average". The actual value will depend on the fraction of time spent in the third configuration: the greater the fraction of time the converter 100 is the third configuration, the lower the average current will be. In this example, the control system 150 controls the converter 100 so that it spends approximately twice as long in the third configuration as the second configuration (i.e., the converter 100 is in the second configuration for one third of the time and in the third configuration for two thirds of the time). If more time was spent in the third configuration, the average current would be lower and *vice versa.*

Turning to FIG. 5A, this shows two further switching configurations of the H-bridge converter 100, referred to herein as the fifth and sixth configurations. The fifth and sixth configurations may also be referred to as "spill configurations" because they each contain a fraction of the overall fault current within the converter 100 but allow a remaining fraction of the fault current to spill to the faulted DC network 11.

In the fifth configuration, the low-side transistor 111-L of the first half-bridge circuit 110 is switched off, the high-side transistor 111-H of the first half-bridge circuit 110 is switched on, the low-side transistor 121-L of the second half-bridge circuit 120 is switched on, and the high-side transistor 121-H of the second half-bridge circuit 120 is switched on. A fraction of the fault current from the battery 15 is contained via the illustrated freewheeling path (solid lines with arrows) and a remaining fraction of the fault current spills to the DC network (dashed lines with arrows). Since the high-side transistor 111-H of the first half-bridge circuit 110 is switched on in the fifth configuration, the current through the inductor 125 is increasing.

In the sixth configuration, the low-side transistor 111-L of the first half-bridge circuit 110 is switched on, the high-side transistor 111-H of the first half-bridge circuit 110 is switched off, the low-side transistor 121-L of the second half-bridge circuit 120 is switched on, and the high-side transistor 121-H of the second half-bridge circuit 120 is switched on. A fraction of the fault current from the battery 15 is contained via the illustrated freewheeling path (solid lines with arrows) and a remaining fraction of the fault current spills to the DC network (dashed lines with arrows). Since the high-side transistor 111-H of the first half-bridge circuit 110 is switched off in the sixth configuration, the current through the inductor 125 is decreasing.

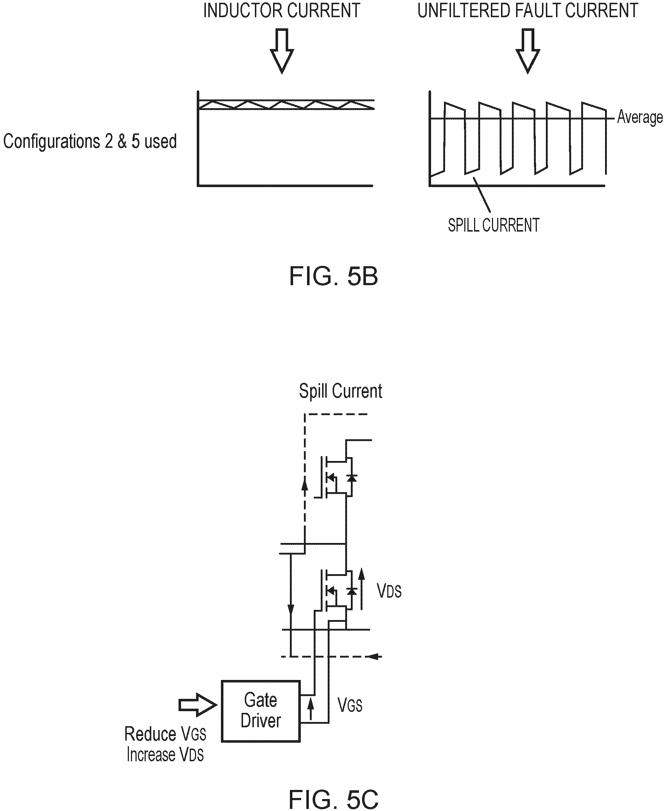

**FIG. 5B** illustrates example current waveforms that may be produced using the spill configurations. In this example, the converter 100 is repeatedly switching between the second configuration (see FIG. 4A) and the fifth configuration (see FIG. 5A). The waveform of the current through the inductor 125 is shown in the left-hand plot and an unfiltered version of the current waveform supplied to the faulted DC network is shown in the right-hand plot. As can be seen from the plots, the converter 100 starts in the fifth configuration, where only a fraction of the fault current spills to the network and the current through the inductor 125 is increasing. The converter 100 is then switched to the second configuration, where the full (or substantially full) fault current is supplied to the DC network and the current through the inductor 125 is decreasing. The average amount of current, shown by the line labelled "Average", is therefore greater than the fraction of current that spills to network in the fifth configuration but lower than the amount of fault current supplied to the fault site in the second configuration. The average amount of current may be adjusted by controlling a respective fraction of time the converter 100 is in the second and fifth configurations. The greater the fraction of time the converter 100 is in the fifth configuration, the lower the average current and *vice versa.*

To access the spill configurations (i.e., the fifth and sixth configurations), it is necessary that the parallel-connected diode associated with the high-side transistor 121-H of the second half-bridge circuit 120 becomes forward biased. This happens if the voltage developed across the low-side transistor 121-L exceeds the forward voltage drop of the diode, which is typically only about 2-3 V. Whether or not this condition is met depends on the level of current and the gate driver. For SiC MOSFETs, the selection of the device and its drain-source resistance, R_{DS-on}, combined with a higher than rated current (e.g.,1.5 per-unit) should enable the condition to be met in all relevant circumstances. However, an additional or alternative approach - shown in **FIG. 5C** - is to temporarily reduce the gate-source voltage, V_{GS}, of the low-side transistor 121-L which increases its R_{DS-on} and thus the voltage available to force the upper diode into conduction. Whilst increasing R_{DS-on} in this way is usually inadvisable because it inherently increases the power losses in the transistor 121-L, it should be acceptable for the short period of time contemplated for fault discrimination and/or isolation.

In each of the above examples, the converter 100 is repeatedly switched between two of the six described configurations. These examples are not intended to be limiting: two or more than two of the six configurations may be used, and different combinations of configurations may be used. Any one or more of the following may be considered:
- To prevent the inductor 125 being continuously energized, which could lead to loss of control of the current level, the two more or configurations should include at least one of the second, fourth and sixth configurations (i.e., at least one of the configurations in which the inductor current is decreasing).
- To prevent the controlled amount of current continuously decaying towards zero where this is not desired (e.g., where fault discrimination and isolation is still in progress), the two more or configurations should include at least one of the first, third and fifth configurations (i.e., at least one of the configurations in which the inductor current is increasing).
- To prevent an average current of zero being supplied to the DC network 11, the two or more configurations should not consist solely of the third and fourth configurations.
- The six configurations may be split into three groups, shown below, and the two or more configurations may include a configuration from at least two different groups.
   ∘ Group 1: Configurations 1 and 2
   ∘ Group 2: Configurations 3 and 4
   ∘ Group 3: Configurations 5 and 6
- The two or more configurations may then include a configuration from at least two different groups, and optionally a configuration from all three groups. Respecting the need to include at least one configuration out of configurations 1, 3 and 5, and at least one configuration out of configurations 2, 4 and 6, the following is a non-exhaustive and exemplary list of possible combinations:
   ∘ 1 and 4; 1 and 6; 2 and 3; 2 and 5; 3 and 6; or 4 and 5.
   ∘ 1, 2 and 3; 1, 2 and 4; 1, 2 and 5; or 1, 3 and 6;
   ∘ 1, 2, 3 and 4; 1, 2, 5 and 6; or 3, 4, 5 and 6
   ∘ 1, 2, 3, 4, and 5
   ∘ 1, 2, 3, 4, 5 and 6.
- The repeated switching between the different configurations may or may not be a repeating pattern. Where a repeating pattern is used, each configuration may be used only once or more than one per cycle of the pattern. For example, where configurations 1, 2, 3 and 4 are used, possible repeating patterns include (1-2-3-4)-(1-2-3-4)-(1-2-3-4)... and so forth, or (1-2-3-4-3-2)-(1-2-3-4-3-2)-... and so forth.

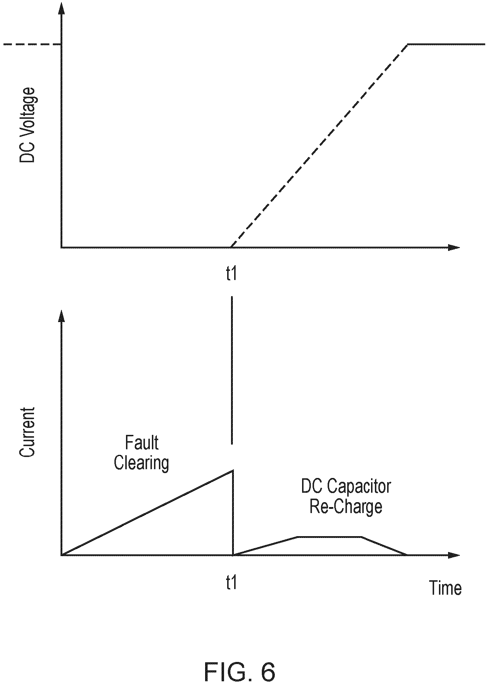

Turning now to **FIG. 6****,** as noted previously, a consequence of a fault in a DC network 11 is that the network voltage collapses to zero or near-zero. This typically causes capacitors in the faulted network to discharge. For example, referring briefly to FIG. 2A, the DC capacitors located between the second half-bridge circuit 120 and the DC network 11 will typically discharge if the voltage across the converter terminals collapses. Once the fault is isolated, the network voltage will begin to rise. In response to this rise or another indication that the fault is isolated, the control system 150 may initially block the flow of current to the previously faulted network, either by turning off the healthy-side transistors 111-L, 111-H or by utilizing the fourth configuration (see FIG. 2B and FIG. 4A) in which current circulates within the converter 100. After blocking the current, the above-described fault current control techniques may be used to inject a low amount of current into the affected DC network to re-charge the DC capacitor(s) and possibly also other capacitors in the DC network. By doing so, it may be possible to quickly restart the electrical power system without necessarily employing soft-start circuits comprising contactors and resistors.

The process is illustrated in FIG. 6. At time zero, the fault in the DC network occurs and the network voltage collapses to near-zero (see top graph). Upon detection of the fault, the fault current is blocked, for example by adopting the configuration shown in FIG. 2B, meaning the network current drops to zero (see bottom graph). Following this, between time zero and time t1, the techniques described above with reference to FIGS. 3 to 5C are used to supply a controlled fault current to identify and clear the fault. At time t1, the fault is cleared, and the network voltage begins to increase (see top graph). In response, the current is initially blocked by adopting the configuration shown in FIG. 2B. After this, the techniques described above with reference to FIGS. 3 to 5C are used to supply a controlled amount of current to recharge capacitors in the affected network. Once the capacitors are charged and the network voltage has reached its target value, normal operation of the electrical power system resumes.

The use of the above-described current control techniques to pre-charge the capacitors may provide further advantages, including the optional omission of pre-insertion resistors (PIRs) in some or all of the power system. PIRs are conventionally fitted to converters to protect the capacitors and converter diodes against high inrush currents at converter start-up, which can degrade the capacitors and semiconductors and limit their lifetime. However, by controlling the current as described herein, the inrush current can be controlled and the PIRs omitted.

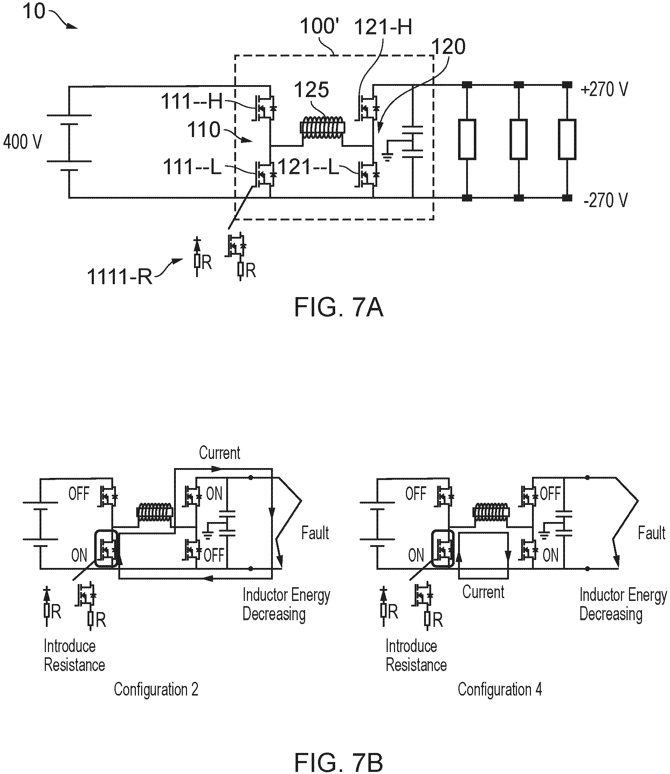

**FIG. 7A** illustrates an alternative topology of an H-bridge DC:DC converter 100'. The configuration of the H-bridge converter 100' is the same as that of the converter 100 described above with reference to FIG. 2A, except for the inclusion of additional resistance 1111-R in lower current path of the first half-bridge circuit 110. Two example implementations of the resistance 1111-R are illustrated. On the left-hand side, the resistance 1111-R is connected in series with the antiparallel diode associated with the low-side transistor 111-L. Alternatively, as shown on the right-hand side, the resistor 1111-R may be connected in series with the low-side transistor 111-L and may be switchable in and out of the current path using a suitable switch.

During normal, fault-free, operation of the electrical power system 10, the high-side transistor 111-H of the first half-bridge circuit 110 is switched on and the low-side transistor 111-L of the first half-bridge circuit 110 is switched off. Therefore, the normal current flow paths (see FIG. 1A) do not include the low-side transistor 111-L and the resistance 1111-R has no effect, and in particular does not add any resistive losses.

However, referring to FIG. 4A and FIG. 5A, the current path does pass through the lower branch of the first half-bridge circuit in each of second, fourth and sixth configuration. These are the configurations in which the current through the inductor is decaying with a time constant equal to UR, where R is the resistance of the current path. Therefore, in these configurations, the additional resistance 1111-R has the effect of reducing the time constant L/R with which the current decays.

Thus, where the fault current control schemes described above with reference to FIGS. 4A-B, 5A-C and 6 are used, the current will decay faster during the times where second, fourth and/or sixth configuration is used. A benefit of this may be that, since the current in the inductor 125 ramps down faster, it gives a higher frequency ripple current. This means the "chopped" current that is passed to the fault site (see FIGS. 4B and 5B) is also of a higher frequency, making it is easier to filter to obtain a desired average value of current that is fed to the fault. Were the additional resistance 1111-R is not provided, considering the extreme where there is virtually no resistance in the fault path, there may be long gaps (perhaps tens or hundreds of milliseconds) between each successive pulse of current fed to the fault making control of the average current more difficult.

In an example not requiring the fault current control schemes described above, the control system 150 may respond to a fault in the DC network 11 by switching the converter 100' to the fourth configuration. This completely blocks the fault current from reaching the fault site, and the current decays with a reduced time constant due to the additional resistance 1111-R in the lower branch of the first half-bridge. The second or sixth configurations could be used instead of the fourth configuration, or the converter may be switched between two or more of the second, fourth and sixth configuration. In these cases, the current would still decay with a reduced time constant but at least some fault current will reach the fault site.

As explained above, the present disclosure may be implemented in an aircraft electrical power system. Exemplary power and propulsion systems are shown in FIGS. 8A-9C.

**FIG. 8A** illustrates an electrical power system 10 of an aircraft. The electrical power system 10 includes two DC networks: a first, higher voltage (e.g., 540 V_{dc}), DC network 11 that supplies power to electrical loads associated with a gas turbine engine 50 and a second, lower voltage (e.g., 270 V_{dc}), DC network 12 that supplies platform electrical loads. The first DC network 11 is supplied with power, via rectifiers 16, 17, from first and second electrical generators 13, 14 that are coupled to the high-pressure (HP) and low-pressure (LP) spools of the gas turbine engine 50. The first DC network is also supplied with power by an energy storage system, ESS, 15, and a first DC:DC power converter 100a is connected between the terminals of the ESS 15 and the first DC network 11 to account for variation in the terminal voltage of the ESS 15 as it charges and discharges. A second DC:DC power converter 100b is connected between the first and second DC networks 11, 12 for power exchange therebetween. Depending on the configuration of the DC:DC converters 100a, 100b, power flow may unidirectional or bidirectional. The system further includes a control system 150, as described previously.

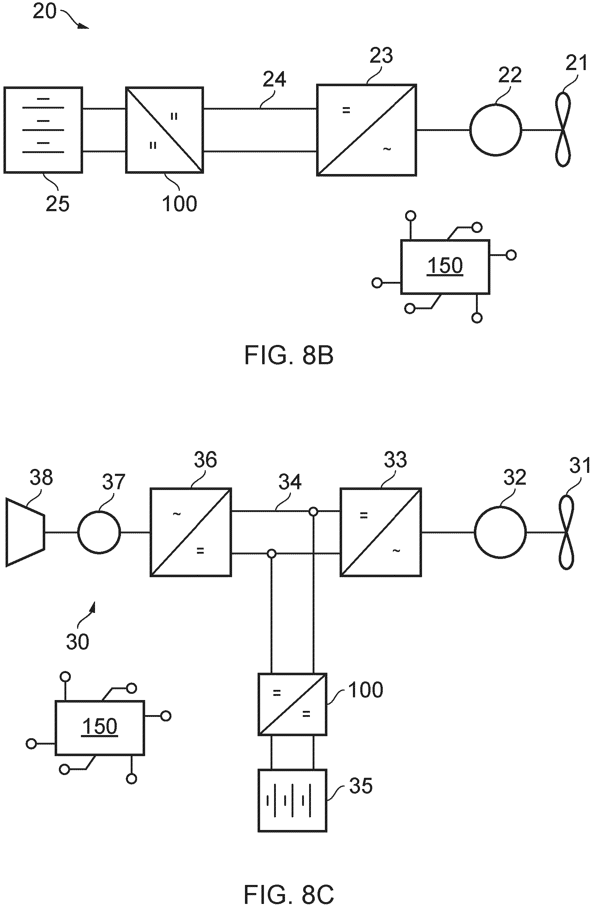

**FIG. 8B** shows, in schematic form, a purely electrical power and propulsion system 20 of an aircraft. The system 20 includes a propulsor 21 (e.g., a propeller or fan), whose rotation is driven by an electrical machine 22. The electrical machine 22 receives electrical power from a DC network 24 via a DC:AC power converter 23. The DC network 24 is supplied with power by an energy storage system 25. A DC:DC converter 100 provides an interface between the energy storage system 25 and the DC network 24. Control of the system is performed by the control system 150.

**FIG. 8C** shows, again in schematic form, a hybrid electrical power and propulsion system 30 of an aircraft. The system 30 includes a propulsor 31 whose rotation is driven by an electrical machine 32. The electrical machine 32 receives electrical power from a DC network 34 via a DC:AC power converter 33. The DC network 34 is supplied with power by two sources: an energy storage system 35 and a generator set including a gas turbine engine 38, an electrical generator 37 coupled to a shaft of the gas turbine engine 37 and a rectifier 36. A DC:DC converter 100 provides an interface between the energy storage system 35 and the DC network 34. The DC:DC converter 100 may be bidirectional to facilitate charging of the energy storage system 35 using power from the generator set, in addition to discharge of the battery to the DC network 34. Control of the system is performed by the control system 150. Those skilled in the art will recognise the propulsion system 30 of FIG. 8C to be of the series hybrid type. Other hybrid electric propulsion systems are of the parallel type, while still others are of the turboelectric type or have features of more than one type.

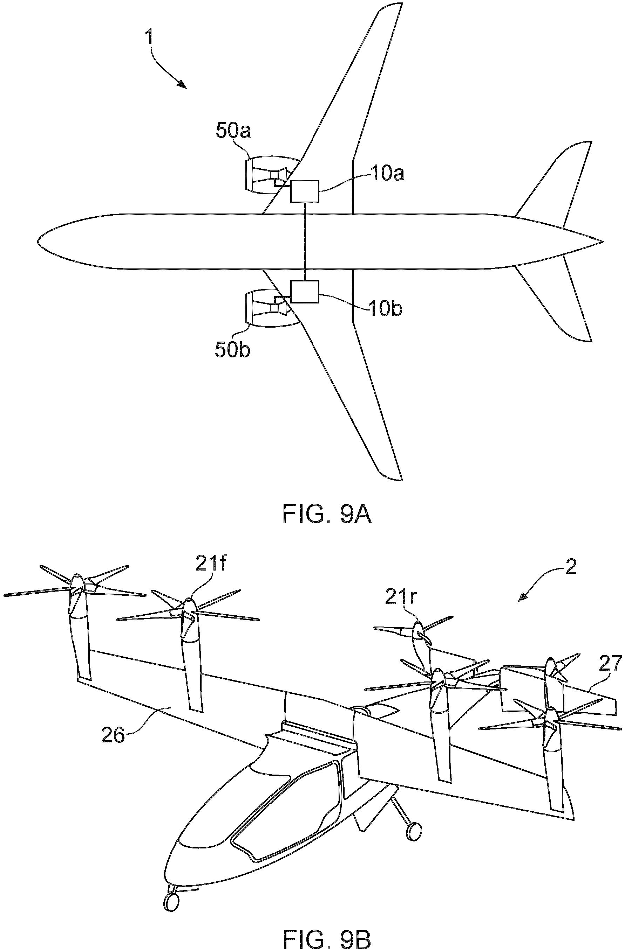

**FIG. 9A** shows an aircraft 1 that includes first and second gas turbine engines 50a, 50b. The engines 50a, 50b are associated with electrical power systems 10a, 10b, which may of the type shown in FIG. 8A or a variant thereof. As illustrated by the dotted lines, the electrical power systems 10a, 10b may be connected. For example, each electrical power system 10a, 10b may have a platform DC electrical network 12 and these may be connected or connectable via bus ties. The gas turbine engines may be of any suitable configuration, for example they may be two-spool, three-spool or geared turbofans having one, two or more shaft-coupled electrical machines 13, 14.

**FIG. 9B** shows a vertical take-off and landing (VTOL) aircraft. The VTOL aircraft has an electric or hybrid electric power and propulsion system, for example of the types shown in FIGS. 8B and 8C. In this exemplary configuration, the VTOL aircraft has front propulsors 21f coupled to a front flight surface and rear propulsors 21r coupled to a rear flight surface. The flight surfaces 26, 27 are capable of tilting between a lift configuration (shown) and a forward flight configuration in which the propulsors 21f, 21r face forward. In other examples, the propulsors 21f, 21r may instead tilt relative to fixed flight surfaces 26, 27.

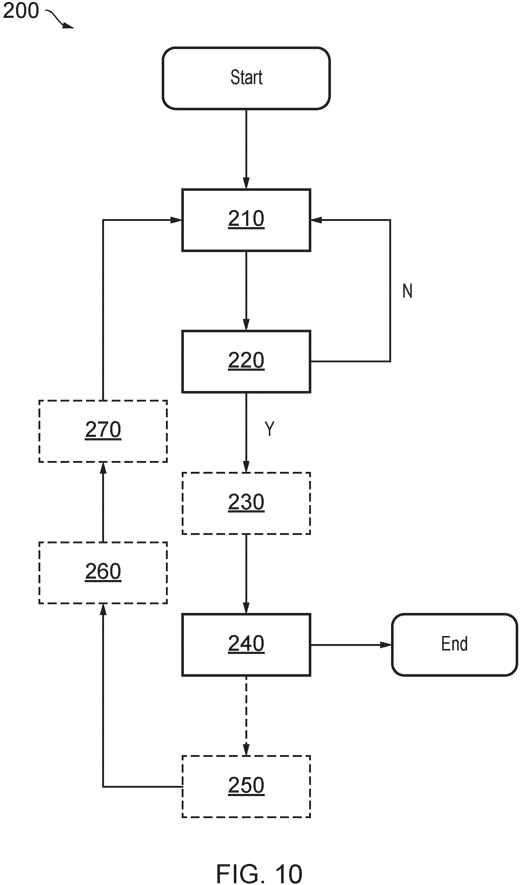

**FIG. 10** is a flow chart illustrating a method 200 of operating an electrical power system that comprises an H-bridge DC:DC converter. The H-bridge DC:DC converter may of the type 100 shown in FIG. 2A or the type 100' shown in FIG. 7A. The electrical power system may be an aircraft electrical power system, for example one of the types shown in FIGS. 8A-8C. Alternatively, it may be an electrical power system for another transport application (e.g., a vehicle, ship or train) or of a non-transport application. The DC:DC converter 100, 100' is connected, at one side, to a DC power source, for example an energy storage system (e.g., ESS 15) or a DC electrical network (e.g., DC network 11). Another DC side of the DC:DC converter 100, 100' is connected to a DC electrical network (e.g., DC network 12).The method 200 may take place under the control of a control system 150, which may take any desired form suitable for the application, e.g., a distributed control system or a single controller.

At the start of the method 200, the electrical power system 200 is operating in a normal condition. In other words, it is functioning as intended with no faults. The control system 150 controls a switching state of the low-side and high-side transistors 111-L, 111-H, 121-L, 121-H of the first and second half-bridge circuits 110, 120 to, for example, match the terminal voltage of the DC power source (e.g., ESS 15 or DC network 11) to the terminal voltage of the DC network (e.g., DC network 12) as described above with reference to FIG. 2A.

At 210, the control system 150 monitors one or more operating parameters of the electrical power system. For example, the control system 150 may monitor the voltage across the output terminals of the converter 100 that face the DC electrical network, or it may monitor one or more other voltages or currents in the DC electrical network.

At 220, the control system 150 determines, based on the monitored operating parameter(s), whether there is a fault in the DC electrical network. For example, the control system may monitor the terminal voltage and make the determination based on whether there is a change in the voltage. Other examples will occur to those skilled in the art. If no fault is detected, the method 200 returns to 210 and the control system 150 continues to monitor the electrical power system. If a fault is detected (e.g., if the monitored voltage drops), the method proceeds to either optional step 230 or step 240.

At optional step 230, the control system 150 responds to the fault by blocking current from passing from the DC power source to the faulted DC network. For example, the control system 150 may switch the H-bridge DC:DC power converter 100 into the fourth configuration of FIG. 4A so that the current is contained within the converter 100 and decays with time constant UR. If the converter is of the type shown in FIG. 7A, the current decays with a reduced time constant in view of the additional resistance 1111-R. The method then proceeds to step 240.

At step 240, the control system 150 modifies a switching operation of the low-side and high-side transistors 111-L, 111-H, 121-L, 121-H of the first and second half-bridge circuits 110, 120 to supply a controlled amount of current from the DC power source to the faulted DC electrical network. To do so, the control system 150 repeatedly switches the H-bridge DC:DC converter 100 between a plurality of different switching configurations and controls a fraction of time the converter 100 is in each of the switching configurations to control the average current level.

Six switching configurations are shown in FIGS. 4A and 5A. The control system 150 may use any two or more of the switching configurations. As explained above, the two or more switching configurations may include at least one of the first, third and fifth configurations and at least one of the second, fourth and sixth configurations. The two or more switching configurations may include at least one configuration from at least two different groups, as explained above. In some examples, the method 200 may end at step 240. For example, the control system 150 may continue to supply the controlled amount of current to the DC network so that one or more loads can continue to operate. As another example, the control system 150 may determine that the fault in the DC network cannot be isolated and may therefore isolate the entire DC network from the DC:DC converter 100 and possibly utilize a redundant system if one is available. In other examples, the method 200 proceeds to 250. At optional step 250, while supplying the controlled amount of current to the DC network, the control system operates one or more protection devices to isolate a fault in the DC network. For example, the control system 150 may operate one or more switch devices (e.g., a mechanical DC contactor, hybrid relay or Solid-State Circuit Breaker) to isolate the fault. It may not be possible to operate such protection devices at zero network current and risky to operate them at full fault current (e.g., due to contactor arcing), however in accordance with the present disclosure such devices can be operated at a controlled current level.

Having isolated the fault, the method may proceed to optional step 260. Here, in response to isolating the fault and/or determining that the fault has been cleared (e.g., due to a measured increase in the network voltage), the control system 150 blocks all current from being supplied from the cleared DC network, for example using the fourth configuration of FIG. 4A. In some examples, step 260 may be omitted and proceed straight to step 270, for example where an already low or zero current was being supplied to the DC network.

At 270, the control system 150 prepares the electrical power system for a restart by recharging one or more capacitors (e.g., a DC link capacitor) that has discharged a consequence of the fault. To do so, the control system 150 supplies a controlled, typically low, amount of current to the DC network by repeatedly switching the converter 100 between a plurality of different switching configurations, as descried above. Having charged the capacitor(s), the electrical power system restarts and begins normal operation. The method 200 therefore proceeds back to 210 where the control system 150 monitors and provides normal control of the system.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It will also be appreciated that whilst the invention has been described with reference to aircraft and aircraft propulsion systems, the techniques described herein could be used for many other applications. These include, but are not limited to, automotive, marine and land-based applications.

## Claims

1. An electrical power system (10, 20, 30), comprising:
an H-bridge DC:DC power converter (100, 100', 100a, 100b) comprising first and second half-bridge circuits (110, 120) each having a low-side transistor (111-L, 121-L) and a high-side transistor (111-H, 121-H), and an inductor (125) connected between respective AC sides of the first and second half-bridge circuits;
a DC power source (11, 15, 25, 35) connected to a DC side of the first half-bridge circuit of the H-bridge DC:DC converter;
a DC electrical network (11, 12, 24, 34) connected to a DC side of second half-bridge circuit of the H-bridge converter; and
a control system (150) configured to:
control a switching state of the low-side and high-side transistors of the first and second half-bridge circuits;
monitor one or more operating parameters of the electrical power system and determine, based on the one or more parameters, whether there is a fault in the DC electrical network; and
in response to determining there is a fault in the DC electrical network, modify a switching operation of the low-side and high-side transistors of the first and second half-bridge circuits to supply a controlled amount of current from the DC power source to the DC electrical network.

2. The electrical power system of claim 1, wherein modifying the switching operation of the low-side and high-side transistors of the first and second half-bridge circuits comprises repeatedly switching the H-bridge DC:DC power converter between two or more configurations selected from:
a first configuration in which the low-side transistor of the first half-bridge circuit is switched off, the high-side transistor of the first half-bridge circuit is switched on, the low-side transistor of the second half-bridge circuit is switched off, and the high-side transistor of the second half-bridge circuit is switched on;
a second configuration in which the low-side transistor of the first half-bridge circuit is switched on, the high-side transistor of the first half-bridge circuit is switched off, the low-side transistor of the second half-bridge circuit is switched off, and the high-side transistor of the second half-bridge circuit is switched on;
a third configuration in which the low-side transistor of the first half-bridge circuit is switched off, the high-side transistor of the first half-bridge circuit is switched on, the low-side transistor of the second half-bridge circuit is switched on, and the high-side transistor of the second half-bridge circuit is switched off;
a fourth configuration in which the low-side transistor of the first half-bridge circuit is switched on, the high-side transistor of the first half-bridge circuit is switched off, the low-side transistor of the second half-bridge circuit is switched on, and the high-side transistor of the second half-bridge circuit is switched off;
a fifth configuration in which the low-side transistor of the first half-bridge circuit is switched off, the high-side transistor of the first half-bridge circuit is switched on, the low-side transistor of the second half-bridge circuit is switched on, and the high-side transistor of the second half-bridge circuit is switched on;
a sixth configuration in which the low-side transistor of the first half-bridge circuit is switched on, the high-side transistor of the first half-bridge circuit is switched off, the low-side transistor of the second half-bridge circuit is switched on, and the high-side transistor of the second half-bridge circuit is switched on.

3. The electrical power system of claim 2, wherein the two or more configurations include:
at least one of the first, third and fifth configurations; and
at least one of the second, fourth and sixth configurations.

4. The electrical power system of claim 2 or claim 3, wherein:
the first and second configurations are a first group of configurations;
the third and fourth configurations are a second group of configurations;
the fifth and sixth configurations are a third group of configurations; and
the two or more configurations include configurations from at least two different groups of the first, second and third groups of configurations.

5. The electrical power system of any one of claim 2 to 4, wherein the two or more configurations include one or both of the fifth configuration and the sixth configuration, and the controller is configured, in response to determining there is a fault in the DC electrical network, to reduce a gate-source voltage, V_{GS}, of the low-side transistor of the second half-bridge circuit.

6. The electrical power system of any one of claims 2 to 5, wherein the control system is configured to control respective fractions of time the H-bridge DC:DC power converter is in each respective one of the two or more configurations to control the amount of current supplied from the DC power source to the DC electrical network.

7. The electrical power system of any one of the preceding claims, wherein supplying the controlled amount of current from the DC power source to the DC electrical network comprises supplying an average of between 1.3 and 1.7 per unit current from the DC power source to the DC electrical network.

8. The electrical power system of any one of the preceding claims, wherein the H-bridge DC:DC converter further comprises a resistor connected with the low-side transistor of the first half-bridge circuit.

9. The electrical power system of claim 8, wherein the H-bridge DC:DC converter further comprises a switch for selectively connecting and disconnecting the resistor to a current path through the low-side transistor of the first half-bridge circuit, and wherein the control system is configured to control the switch to connect the resistor and the low-side transistor of the first half-bridge circuit in response to determining there is a fault in the DC electrical network.

10. The electrical power system of claim 8, wherein the resistor is connected in series with a diode connected in parallel with the low-side transistor of the first half-bridge circuit.

11. The electrical power system of any one of the preceding claims, wherein the control system is further configured to:
isolate the fault in the DC network by operating one or more protection devices; and
after isolating the fault in the DC network, charge one or more capacitors of the DC electrical network by controlling the switching operation of the low-side and high-side transistors of the first and second half-bridge circuits to supply a controlled amount of current from the DC power source to the DC electrical network.

12. An H-bridge DC:DC power converter (100') comprising a first half-bridge circuit (110) having a low-side transistor (111-L) and a high-side transistor (111-H); a second half-bridge circuit (120) having a low-side transistor (121-L) and a high-side transistor (121-H); an inductor (125) connected between respective AC sides of the first and second half-bridge circuits; and a resistor (1111-R) connected with the low-side transistor of the first half-bridge circuit.

13. The H-bridge DC:DC converter of claim 12, further comprising a switch for selectively connecting and disconnecting the resistor to a current path through the low-side transistor of the first half-bridge circuit.

14. The H-bridge DC:DC converter of claim 13, wherein the resistor is connected in series with a diode connected in parallel with the low-side transistor of the first half-bridge circuit.

15. An electrical power system comprising:
the H-bridge DC:DC power converter of any one of claims 12 to 14;
a DC power source connected to a DC side of the first half-bridge circuit;
a DC electrical network connected to a DC side of the second half-bridge circuit; and
a control system configured to control a switching operation of the transistors,
wherein the control system is configured to:
during fault-free operation, repeatedly switch the H-bridge DC:DC power converter between a first configuration in which the low-side transistor of the second half-bridge circuit is switched on and the high-side transistor of the second half-bridge circuit is switched off and a second configuration in which the low-side transistor of the second half-bridge circuit is switched off and the high-side transistor of the second half-bridge circuit is switched on, wherein in both the first and second configurations the low-side transistor of the first half-bridge circuit is switched off and the high-side transistor of the first half-bridge circuit is switched on;
in response to a fault in the DC electrical network, switch the H-bridge DC:DC power converter into a configuration in which the low-side transistor of the first half-bridge circuit is switched on so that current passes through the resistor.
